Europäisches Patentamt

European Patent Office

Office européen des brevets

(19)

(11) Veröffentlichungsnummer: **0 431 351 B1**

(12) **EUROPÄISCHE PATENTSCHRIFT**

(45) Veröffentlichungstag der Patentschrift: **21.09.94**

(51) Int. Cl.[5]: **B01D 53/34**, B01D 53/36, B01D 53/02

(21) Anmeldenummer: **90121577.2**

(22) Anmeldetag: **12.11.90**

(54) **Verfahren und Vorrichtung zur Entfernung von Fluor und anorganischen Fluoriden aus Gasen.**

(30) Priorität: **07.12.89 DE 3940493**

(43) Veröffentlichungstag der Anmeldung:
**12.06.91 Patentblatt 91/24**

(45) Bekanntmachung des Hinweises auf die
Patenterteilung:
**21.09.94 Patentblatt 94/38**

(84) Benannte Vertragsstaaten:
**AT CH DE ES FR GB IT LI NL SE**

(56) Entgegenhaltungen:
**EP-A- 0 204 390**
**DE-A- 3 432 033**
**DE-C- 3 841 847**
**US-A- 3 900 298**

(73) Patentinhaber: **MAN Nutzfahrzeuge Aktiengesellschaft
Postfach 50 06 20
D-80976 München (DE)**

(72) Erfinder: **Eberhard, Jacob, Dr. Dipl.-Chemiker
Riedwinkel 2
W-8132 Tutzing (DE)**

## Beschreibung

Die Erfindung betrifft ein Verfahren zur Entfernung und Vernichtung von Fluor und/oder anorganischen Fluorverbindungen aus Gasen bzw. Abgasen, die Fluor und/oder Fluorverbindungen enthalten, unter Verwendung einer Absorbens/Katalysator-Masse (AKM).

Fluor ($F_2$) und Fluorverbindungen (AF), die in den Abgasen von Einrichtungen vorkommen, die zur Fluorierung von Kunststoffoberflächen (Folien, Kraftstoffbehälter), Materialanalyse nach dem Fluorverbrennungsverfahren, Halbleiterherstellung, CVD-Abscheidung, Behandlung von Kernbrennstoffen oder chemischer Synthese in Labor und Betrieb verwendet werden, sind bekanntlich hochgiftig und dürfen nur im Spurenbereich emittiert werden. Ihre Beseitigung erfordert daher sehr effektive Methoden, die auch bei geringen Konzentrationen an $F_2$ und AF hohe Umsätze gewährleisten.

Die Beseitigung des $F_2$ und des AF sollte vorzugsweise derart erfolgen, daß ein Recycling des Wertstoffs Fluor ermöglicht wird und der apparative Aufwand gering ist.

In Ullmann's Encyclopedia of Industr. Chem. Vol. A 11 (1988) 303 sind Methoden zur Vernichtung von $F_2$ der gattungsgemäßen Art angegeben. Natronkalk-Festbettabsorber (Navratil, USAEC-Report RFP 1200, 1968) neigen zur Verstopfung. Eine Wäsche mit Kalilauge (5%) oder die Reaktion mit Kohle führen zu anderen toxischen Gasen (Netzer, GAT-T-1922), Goodyear Atomic Corp., 1972). Die Umsetzung des $F_2$ mit aktiven Aluminiumoxid im Festbett (siehe Netzer) ist die gegenwärtig am häufigsten angewandte Methode. Die in Holmes et al., I & EC Process Design and Dev. & (1967) 408 beschriebene Fließbettenmethode unter Anwendung einer AKM hat sich wegen des erhöhten apparativen Aufwands nicht durchgesetzt. Die $Al_2O_3$-Methode besitzt folgende Nachteile: a) Verstopfen des Reaktionsbettes bei Festbettreaktoren und b) bei verdünntem Fluor werden Reaktortemperaturen oberhalb von 300°C für vollständige Umsetzungen benötigt.

Injizieren von Fluor in die Flamme eines Propan/Butan-Brenners führt zu $CF_4$ und höheren Fluroalkanen, die als Treibhauseffektgase schädlich sind. Sämtliche bekannten Methoden sind ungeeignet für das Recycling des Wertstoffs Fluor.

Spezielle Methoden zur Beseitigung anorganischer Fluoride in der Gasphase sind kaum bekannt, (Ullmann, I. c., 307ff), mit Ausnahme der Sorption von HF und anderen Lewis-sauren Fluoriden an Natriumfluorid (Ullmann, I. c., S. 303). $NF_3$ wird durch Umsetzung mit Metallen (W,Mo) zersetzt. Hierbei entstehen toxische Hexafluoride, die durch eine Ammoniumcarbonatwäsche entfernt werden (JP 62, 225, 228, 3. Oktober 1987).

Da sämtliche bisher bekannten Verfahren zur Vernichtung von $F_2$ und AF mit Ausnahme der NaF-Methode für AF Nachteile aufweisen, die ihre Anwendbarkeit beschränken, lag der vorliegenden Erfindung die Aufgabe zugrunde, ein Verfahren bereitzustellen, durch das die Nachteile der bekannten Verfahren eliminiert werden, d. h. die Vernichtung des $F_2$ und der AF ohne die Bildung von Sekundärschadstoffen möglich ist.

Die Aufgabe wird erfindungsgemäß durch die Merkmale des Anspruchs 1 gelöst.

Es wurde gefunden, daß durch Verwendung von großoberflächigem (aktiven) Titandioxid ($TiO_2$) als Absorbens und Katalysator für die Hydrolyse von $F_2$ und AF nicht nur die Bildung von Sekundärschadstoffen verhindert, sondern auch die Verstopfungsgefahr gehemmt und ein Prozeß bei niedrigeren Temperaturen ermöglicht wird. Bevorzugt werden hierbei Verbindungen im System Titandioxid-Metatitansäure eingesetzt. Außerdem ist die Regeneration des Fluoranteils möglich.

Bereits bei Raumtemperatur lassen sich Gasgemische, die 0,001 - 100% Fluor enthalten, vollständig an aktivem $TiO_2$ bei Kontaktzeiten größer 0,1 sec. absorbieren. Die chemischen Vorgänge werden hierbei in erster Linie vor der $F_2$-Konzentration bestimmt. Bei sehr kleinen Konzentrationen (0,001 - 1% $F_2$) ist die durch die Reaktion des $F_2$ mit dem $TiO_2$ bedingte Temperaturerhöhung gering. $F_2$ reagiert mit dem am $TiO_2$ sorbierten Wasser.

$$H_2O \text{ (ads.)} + F_2 \rightarrow 2HF + \tfrac{1}{2} O_2 \qquad (1)$$

und mit den am Titan gebundenen Hydroxidgruppen

$$\equiv Ti\text{-}OH + F_2 \rightarrow \equiv Ti\text{-}F + \tfrac{1}{2} O_2 + HF \qquad (2)$$

Das bei (1) und (2) gebildete HF reagiert mit weiteren Hydroxidgruppen

$$\equiv Ti\text{-}OH + HF \rightarrow \equiv Ti\text{-}F + H_2O \qquad (3)$$

unter Bildung von Wasser.

Für die Absorption von Fluor unter den genannten Bedingungenn eignet sich besonders ein aktives Titandioxid, welches viele Hydroxidgruppen enthält (Metatitansäure) mit einer BET-Oberfläche von 30 - 350 $m^2/g$. Die Sorptionskapazität für Fluor beträgt 80 - 120 g Fluor pro kg $TiO_2$. Die Restfluorkonzentration liegt unter 1ppm.

Bei $F_2$-Konzentrationen zwischen 1- 100% bildet sich an der Eintrittsseite des Reaktors eine Reaktionsfront aus, die durch Temperaturerhöhung auf 100 bis 500°C gekennzeichnet ist. Unter diesen Bedingungen erfolgt auch direkte Reaktion mit $TiO_2$ mit BET-Oberflächen, die kleiner als 30$m^2/g$

sind. Die Hauptreaktion ist mit

$$TiO_2 \ + \ xF_2 \ \rightarrow \ TiO_{2-x} F_{2x} \ + \ \tfrac{x}{2} O_2 \quad (4)$$

die Bildung von nichtstöchiometrisch zusammengesetzten Titanoxidfluorid und Sauerstoff. Die Sorptionskapazität für Fluor beträgt unter diesen Bedingungen 60 - 600 g Fluor pro kg $TiO_2$. Die Restfluorkonzentration liegt unter 1ppm. Ein Verstopfen des Festbettreaktors wird nicht beobachtet. Dies ist auf die intermediäre Bildung von flüchtigem Titantetrafluorid in der Reaktionszone zurückzuführen,

$$TiO_2 \ + \ 2F_2 \ \rightarrow \ TiF_4 \ + \ O_2 \quad (5)$$

welches von weiterem $TiO_2$ unter Bildung nichtstöchiometrischer Titanoxidfluoride abgebunden wird.

Von besonderer Bedeutung ist die Verwendung des $TiO_2$ als Absorptionsmittel für Fluor durch seine Regenerierbarkeit beim Erhitzen mit Wasserdampf oder feuchter Luft.

$$TiO_{2-x} F_{2x} \ + \ xH_2O \ \rightarrow \ TiO_2 \ + \ 2xHF \quad (6)$$

Die notwendigen Temperaturen zur vollständigen HF-Entfernung liegen zwischen 500 und 600°C, eine teilweise HF-Entfernung ist zwischen 250 - 500°C zu erzielen.

Eine kontinuierliche Entfernung von Fluor aus Gasmischungen gelingt durch katalytische Hydrolyse des Fluors bei 250 - 600°C an Titandioxid als Katalysator nach

$$F_2 \ + \ H_2O \ \rightarrow \ 2HF \ + \ \tfrac{1}{2} O_2 \quad (7)$$

Das entstehende HF kann im Gegensatz zu Fluor durch eine einfache Wasserwäsche und/oder durch Kondensation bei Temperaturen unterhalb von 20°C quantitativ aus dem Gasstrom entfernt werden. Für die Vernichtung der AF ist Titandioxid ebenfalls sehr aktiv:
HF wird bei Temperaturen unter 200°C nach Reaktion (3) und in Umkehrung der Hochtemperaturreaktion (6) unter Freisetzung von Wasser absorbiert.

Flüchtige und leicht hydrolysierbare AF werden bei Temperaturen unter 250°C an Titandioxid bis auf geringste Restgehalte von <0,1 mg/Nm$^3$ bei Kontaktzeiten von >0,1 sec. chemisorbiert. Eine Regeneration der Absorbens/Katalysator-Masse gelingt durch Erhöhung der Temperatur auf 250 - 600°C durch Zurverfügungstellung von Wasser durch Hydrolyse der chemisorbierten Verbindungen. Die AKM wird dabei von ihrem Fluorgehalt durch Freisetzung als HF befreit. Enthalten die AF nur die Elemente Kohlenstoff, Stickstoff, Sauerstoff, Schwefel, Chlor, Brom, Jod und/oder Xenon, ist eine vollständige Regeneration der Absorbens/Katalysator-Masse nach folgenden beispielhaften Reaktionsgleichungen möglich

$$COF_2 \ + \ H_2O \ \rightarrow \ CO_2 \ + \ 2HF \quad (8)$$

$$2NF_3 \ + \ 3H_2O \ \rightarrow \ NO \ + \ NO_2 \ + \ 6HF \quad (9)$$

$$OF_2 \ + \ H_2O \ \rightarrow \ O_2 \ + \ HF \quad (10)$$

$$SF_4 \ + \ H_2O \ \rightarrow \ SO_2 \ + \ 4HF \quad (11)$$

$$2ClF_3 \ + \ 5H_2O \ \rightarrow \ Cl_2 \ + \ 2,5O_2 \ + \ 10HF \quad (12)$$

$$2BrF_5 \ + \ 5H_2O \ \rightarrow \ Br_2 \ + \ 2,5O_2 \ + \ 10HF \quad (13)$$

$$2IF_7 \ + \ 7H_2O \ \rightarrow \ I_2 \ + \ 3,5O_2 \ + \ 14HF \quad (14)$$

$$XeF_2 \ + \ H_2O \ \rightarrow \ Xe \ + \ 0,5O_2 \ + \ HF \quad (15)$$

Enthalten die AF Elemente, die nichtflüchtige Oxide bilden, ist nur eine Teilregeneration der Absorbens/Katalysator-Masse unter Freisetzung von HF möglich, z. B.

$$WF_6 \ + \ 3H_2O \ \rightarrow \ WO_3 \ + \ 6HF$$

Das nichtflüchtige Oxid - hier $WO_3$ - verbleibt in der Absorbens/Katalysator-Masse.

Die Entfernung von anorganischen Fluoriden, welche die Elemente Kohlenstoff, Stickstoff, Sauerstoff, Schwefel, Chlor, Brom, Jod und/oder Xenon enthalten, wird in der Gasphase durchgeführt, indem man ein Gasgemisch, welches die genannten Verbindungen enthält, auf n mol Gesamtfluorgehalt mindestens n/2 mol Wasserdampf zur Verfügung stellt und mit einer Absorbens/Katalysator-Masse kontaktiert, die Titandioxid als Hauptbestandteil (>70%) enthält, und bei Temperaturen von 150 - 600°C mit Kontaktzeiten von 0,05 - 150 sec. arbeitet. Die chemischen Reaktionen entsprechen den Reaktionen (8) - (15).

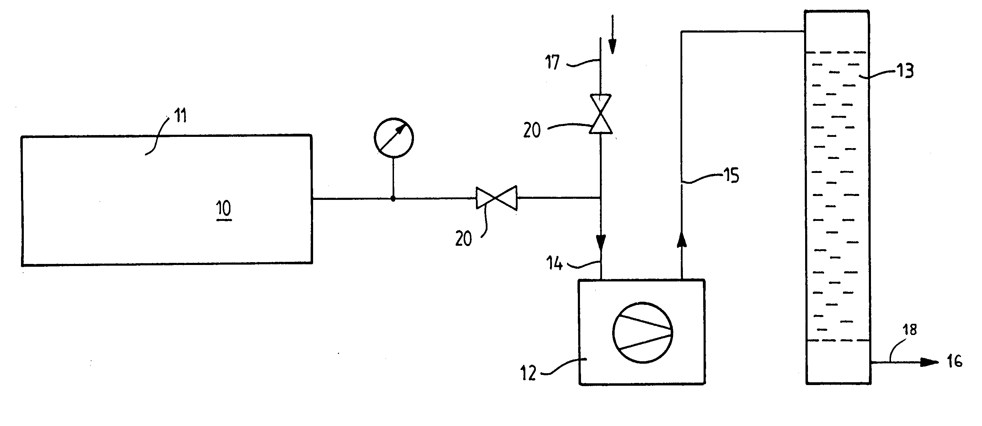

In der Zeichnung ist eine Versuchsanordnung zum unten angegebenen Beispiel 8 gezeigt.

Die Vorrichtung zum Entfernen von $F_2$ und AF aus Gasgemischen besteht aus einem das zu reinigende Gasgemisch 10 enthaltenden Behälter 11, der mit der Saugseite 14 einer Vakuumpumpe 12 verbunden ist. Mit der Vakuumpumpe 12 wird das Gasgemisch 10 in ein zylindrisches Absorber-Katalysatorbett 13, das vorwiegend aus $TiO_2$ besteht, gepumpt. Hier reagieren die anorganischen Fluoride und das Fluor aus dem Gasgemisch 10 entsprechend den nachstehenden Beispielen. Am Ausgang 18 des Bettes 13 strömt schließlich das von diesen Komponenten gereinigte Gasgemisch 16 aus.

Über Ventile 20 ist die Vakuumpumpe 12 an eine Spülgasleitung 17 zur Reinigung der Pumpe anschließbar. Das Spülgas, vorzugsweise ein Inertgas, wird ebenfalls durch das Absorbens/Katalysator-Bett 13 geführt, um etwaige Rückstände von $F_2$ oder AF aus dem Leitungssystem, die vom Inertgas mitgeführt werden, zu beseitigen.

Beispiel 1

$TiO_2$ der ungefähren Zusammensetzung $TiO_2 \cdot 0{,}2\ H_2O$ in Pelletform (1 - 3 mm Durchmesser) und einer BET-Oberfläche (spezifische Oberfläche, gemessen nach dem Verfahren von Brunauer, Emmet, Teller) von 250 $m^2/g$ wird bei RT in einem Festbett (Durchmesser 80 mm x 380 mm Höhe) von einem Abgas durchströmt, welches 1 Vol.% Fluor, Rest, Stickstoff, enthält. Die Kontaktzeit beträgt 10 sec. Nach dem Absorbens/Katalysator wird eine Restfluorkonzentration mit Drägerröhrchen von <1 Vol.-ppm und mit dem Massenspektrometer von <0,1 Vol.-ppm gemessen. Das Abgas war geruchlos. Gleiche Ergebnisse wurden mit einem Abgas erhalten, welches 0,1 Vol.% Fluor enthält. Nach Absorption von ca. 2 mol Fluor war der Absorber gesättigt. Die Fluorkonzentration steigt danach schnell auf Werte über 1ppm.

Beispiel 2

$TiO_2$ in Pelletform (2 - 4 mm d) und einer BET-Oberfläche von 70$m^2/g$ wird bei RT in einem zylindrischen Festbett (Durchmesser 80 x 380 mm) von einem Abgas durchströmt, welches 1 Vol.% Fluor, Rest Stickstoff, enthält. Die Kontaktzeit beträgt 10 sec.

Nach dem Absorber wird eine Restfluor-Konzentration mit Drägerröhrchen <1ppm gemessen. Nach Absorption von 34 g Fluor ist der Absorber gesättigt. Durch zweistündiges Heizen auf 450°C und Durchleiten von feuchter Luft wird der Absorber unter Abgabe von HF regeneriert.

Beispiel 3

$TiO_2$ in Pelletform (2 - 4 mm d) mit einer BET-Oberfläche von 70 $m^2/g$ wird in einem zylindrischen Festbett (Durchmesser 90 x 280 mm) von einem Abgas durchströmt, welches 0,1 Vol.% Fluor, 1 Vol.% Wasserdampf, Rest Luft enthält. Die Kontaktzeit beträgt 2 sec. Bei einer Temperatur von 450°C erfolgt eine katalytische Hydrolyse des Fluors zu HF und $O_2$. Der Restfluorgehalt im Abgas wurde durch MS-Analyse zu <0,1ppm bestimmt.

Beispiel 4

$TiO_2$ der ungefähren Zusammensetzung $TiO_2 \cdot 0{,}2\ H_2O$ in Pelletform ( 1- 3 mm Durchmesser) und einer BET-Oberfläche von 250 $m^2/g$ wird bei RT in einem Festbett (Durchmesser 80 x 380 mm) von einem Abgas durchströmt, welches jeweils 0,1 Vol% der folgenden Fluoride in Stickstoff, Sauerstoff, Argon und/oder Fluor enthält: HF, $BF_3$, $COF_2$, $CF_3OF$, $OF_2$, $O_2F_2$, $SiF_4$, $PF_5$, $POF_3$, $SF_4$, $SOF_2$, $SOF_4$, ClF, $ClF_3$, $ClF_5$, $ClOF_3$, $ClO_2F$, $GeF_4$, $AsF_5$, $SeF_6$, BrF, $BrF_3$, $BrF_5$, $KrF_2$, $SbF_5$, $TeF_6$, $IF_5$, $IF_7$, $XeF_2$, $XeF_4$, $XeF_6$, $XeOF_4$, $VF_5$, $VOF_3$, $CrF_5$, $CrO_2F_2$, $CrOF_4$, $MoF_6$, $WF_6$, $ReF_6$, $ReF_7$, $UF_6$.

Die Kontaktzeit beträgt 5 sec. Nach dem Absorber ist durch FTIR-Gasanalyse mit einer 2m-Langwegküvette keines dieser Fluoride mehr nachweisbar.

Beispiel 5

$TiO_2$ in Pelletform ( 2 - 4 mm Durchmesser) und einer BET-Oberfläche von 70 $m^2/g$ wird bei RT in einem zylindrischen Festbett (Durchmesser 80 x 380 mm) von einem Abgas durchströmt, welches 1 Vol.% der folgenden Fluoride in Stickstoff, Sauerstoff und/oder Argon enthält: HF, $COF_2$, $OF_2$, $O_2F_2$, $IF_5$, $SOF_2$, ClF, $ClF_5$, $ClOF_3$, $ClF_3$, $ClO_2F$, BrF, $BrF_3$, $BrF_5$, $KrF_5$, $IF_5$, $IF_7$, $XeF_6$, $XeOF_4$.

Die Kontaktzeit beträgt 10 sec. Nach dem Absorber ist durch FTIR-Gasanalyse mit einer 2m-Langwegküvette keines dieser Fluoride mehr nachweisbar. Durch zweistündiges Heizen auf 450°C und Durchleiten von feuchter Luft wird der Absorbens/Katalysator unter Abgabe von HF und anderen Stoffen regeneriert.

Beispiel 6

$TiO_2$ in Pelletform ( 2 - 4 mm Durchmesser) und einer BET-Oberfläche von 70 $m^2/g$ wird bei Temperaturen zwischen 100 - 250°C in einem zylindrischen Festbett (Durchmesser 80 x 380 mm) von einem Abgas durchströmt, welches 1 Vol.% der folgenden Fluoride in Stickstoff, Sauerstoff und/oder Argon enthält: $NF_3$, $CF_3OF$, $SO_2F_2$, $ClO_3F$, $NOF_3$, $IOF_5$. Die Kontaktzeit beträgt 5 sec. Nach dem Absorbens/Katalysator ist durch FTIR-Gasanalyse mit einer 2m-Langwegküvette keines dieser Fluoride mehr nachweisbar. Durch zweistündiges Heizen auf 450°C und Durchleiten von feuchter Luft wird Absorber unter Abgabe von HF regeneriert.

Beispiel 7

$TiO_2$ in Pelletform (2 - 4 mm Durchmesser) mit einer BET-Oberfläche von 70 $m^2/g$ wird in einem zylindrischen Festbett (Durchmesser 90 x 280 mm) von einem Abgas durchströmt, welches 0,1% der folgenden Fluoride $NF_3$, $CF_3OF$, $SO_2F_2$, $ClO_3F$, $NOF_3$, $IOF_5$ sowie 1% Wasserdampf, Rest Stickstoff, Sauerstoff und/oder Argon enthält. Die Kontaktzeit beträgt 2 sec. Bei einer Temperatur zwischen 250 und 600°C, vorzugsweise bei 450°C, erfolgt katalytische Hydrolyse der Fluoride zu gasförmigen Oxiden des Kohlenstoffs, Schwefels und Stickstoffs, elementaren Halogenen und zu HF. Die Fluoride sind durch FTIR-Gasanalyse nicht mehr nachweisbar.

## Beispiel 8

Die Beseitigung eines Abgases 10 einer Batch-Fluorierung von Kunststoffen mit einer Mischung von 5% Fluor in Stickstoff in einem 200 l-Behälter 11, welches 0,6% Fluor, 1,8% HF und 0,1% $COF_2$ enthält, erfolgt durch Evakuieren des Fluorierungsbehälters 11 mit einer zweistufigen Drehschieberpumpe 12 in fluorfester Ausführung (Perfluorpolyalkylether-Öl) mit 16 $Nm^3$/h-Saugleistung. Der Behälter 11 wird in 5 Minuten von 1000 auf $10^{-2}$ mbar evakuiert. Das durch die Drehschieberpumpe 12 verdichtete Abgas 10 wird durch ein zylindrisches Absorberbett 13 von 400 mm Höhe gefüllt mit 25 l $TiO_2 \cdot 0,2H_2O$ in Pelletform ( 1- 3 mm Durchmesser, BET-Oberfläche von 250 $m^2$/g) bei RT hindurchgepumpt. Das Abgas 16 nach dem Absorber 13 enthält nach MS-Analyse <0,1ppm $F_2$, <1ppm HF und <0,1ppm $COF_2$.

## Vergleichsbeispiel zu Beispiel 8

Füllt man den in Beispiel 8 beschriebenen Absorber 13 mit aktiver Tonerde ($\gamma$-$Al_2O_3$, 200 $m^2$/g BET-Oberfläche), so erhält man unter den Bedingungen des Beispiels 8 ein Abgas, welches noch 0,5% Fluor, 0,1% HF und 0,05% $COF_2$ enthält.

## Beispiel 9

In diesem Beispiel wird die Beseitigung eines Abgases eines Elementaranalysators, der nach dem Prinzip der Fluorverbrennung arbeitet, beschrieben. Pro Analyse entsteht ein Abgas, welches außer unumgesetzten Fluor (2 - 10 mmol) noch folgende Fluoride mit Maximalkonzentrationen von 2 mmol enthalten kann: HF, $BF_3$, $CF_3OF$, $SiF_4$, $VF_5$, $SO_2F_2$, $ClF_3$, $ClF_5$, $GeF_4$, $AsF_5$, $SiF_4$, $BrF_5$, $SbF_5$, $TeF_6$, $IF_7$, $XeF_4$, $XeF_6$, $MoF_6$, $WF_6$, $ReF_7$. $OsF_6$, $IrF_6$ und $UF_6$. Dieses Gasgemisch wird mit einer zweistufigen, fluorfesten Drehschieberpumpe (4 $Nm^3$/h-Saugleistung) verdichtet und durch einen zylindrischen Absorber (Durchmesser 80 mm) von 3 l Volumen geleitet, der 3 kg $TiO_2$ in Pelletform ( 1- 3 mm Durchmesser, BET-Oberfläche von 250 $m^2$/g) enthält.

Am Ausgang des Absorbers sind sowohl Fluor, als auch die genannten Fluoride durch MS-Analyse im Bereich oberhalb von 0,1ppm nicht mehr nachweisbar. Der Absorber besitzt eine Kapazität, die die Durchführung von mindestens 3000 Analysen bzw. Pumpzyklen erlaubt.

## Beispiel 10

Vor dem Ausbau, Ölwechsel oder längerem Abstellen der Vakuumpumpen in Beispiel 8 und Beispiel 9 werden die Pumpen mit Inertgas (Stickstoff, Argon) gespült und das Spülgas, welches Fluor und/oder anorganische Fluoride enthält, durch die $TiO_2$-Absorber gepumpt. Bei diesem Spülvorgang konnte durch MS-Analyse gezeigt werden, daß die Gesamt-Fluorkonzentration im Abgas unter 1 mg/$Nm^3$ gesenkt wurde.

## Vergleichsbeispiel zu Beispiel 10

Wird der Absorber, der nach dem Auspuffstutzen der Vakuumpumpen angeordnet ist, mit aktiver Tonerde gefüllt, erfolgt bei Raumtemperatur nur eine sehr geringe Reinigung der stark verdünnten, fluor- und/oder fluoridhaltigen Spülgase. Durch MS-Analyse wurden Gesamt-Fluorkonzentration über 100 mg/$Nm^3$ nach Absorber gefunden.

## Beispiel 11

Eine Ampulle, die 180 mg Fluor enthält, wird zusammen mit 5 g $TiO_2$-Pellets (0,2 - 2 mm Durchmesser, BET-Oberfläche 250 $m^2$/g) in Polyethylen-Doppelbeutel eingeschweißt. Beim Platzen der Ampulle wird das austretende Fluor von der $TiO_2$-Absorbermasse abgebunden. Fünf Minuten nach dem Fluoraustritt wird der Beutel geöffnet. Mit Drägerröhrchen wurde eine Restfluorkonzentration von <1 Vol.-ppm gemessen. Ein Geruch nach Fluor war nicht wahrnehmbar.

## Patentansprüche

1. Verfahren zur Entfernung von Fluor und/oder anorganischen Fluoriden aus Gasen, unter Verwendung einer Absorbens/Katalysator-Masse (AKM)
dadurch gekennzeichnet,
daß man das zu reinigende Gasgemisch, welches Fluor und/oder anorganische Fluoride enthält, mit einer AKM kontaktiert, die Titandioxid als Hauptbestandteil enthält.

2. Verfahren nach Anspruch 1, dadurch gekennzeichnet, daß das zu reinigende Gasgemisch bei Temperaturen von - 200° bis 250°C und Partialdrücken des Fluors bzw. der anorganischen Fluoride zwischen $10^{-5}$ mbar bis 1 bar und einer Kontaktzeit von mindestens 0,1 sec. durch die AKM geleitet wird.

3. Verfahren nach den Ansprüchen 1 oder 2, dadurch gekennzeichnet, daß zur Regenerierung der beladenen AKM diese mit Wasserdampf oder wasserdampfhaltigen Gasen bei 250 bis 600°C, vorzugsweise bei 450°C, behandelt wird.

**4.** Verfahren nach Anspruch 3, dadurch gekennzeichnet, daß die AKM intermittierend durch Erhöhung der Temperatur auf 250 bis 600°C und durch Zurverfügungstellung von Wasser in Form von Dampf und/oder feuchter Luft regeneriert wird.

**5.** Verfahren nach den Ansprüchen 3 oder 4, dadurch gekennzeichnet, daß bei einem zu reinigenden Gasgemisch das Fluor und/oder die Fluoride der Elemente Kohlenstoff, Stickstoff, Sauerstoff, Schwefel, Chlor, Brom, Jod und/oder Xenon enthält, auf n mol Gesamtfluorgehalt mindestens n/2 mol Wasserdampf zur Verfügung gestellt wird und daß Temperaturen von 100 - 600°C und Kontaktzeiten von 0,05 - 100 sec. verwendet werden.

**6.** Verfahren nach Anspruch 1-5, dadurch gekennzeichnet, daß die AKM (13) mindestens 70% Titandioxid enthält.

**7.** Verfahren nach Anspruch 1 oder 2, dadurch gekennzeichnet, daß die BET-Oberfläche der AKM 10 - 350 $m^2$/g beträgt.

**8.** Verfahren nach Anspruch 7, dadurch gekennzeichnet, daß bei Verwendung des AKM als Absorbens, die BET-Oberfläche mindestens 20 $m^2$/g beträgt.

**9.** Verfahren nach Anspruch 7, dadurch gekennzeichnet, daß bei Verwendung des AKM als Katalysator die BET-Oberfläche unter 70 $m^2$/g beträgt.

**10.** Verfahren nach einem der vorhergehenden Ansprüche, dadurch gekennzeichnet, daß der AKM (13) eine korrosionsfeste Vakuumpumpe (12) zugeordnet wird, deren Saugseite (14) wahlweise mit einem das zu reinigende Gasgemisch (10) enthaltenden Behälter (11) und einem Spülgasreservoir (17) und deren Druckseite (15) mit der AKM (13) verbunden werden.

**11.** Verwendung einer überwiegend aus Titandioxid bestehenden Absorbens/Kataloysator-Masse als Schutzstoff für Lagerung und Transport von Fluor und anorganischen Fluoriden zur Vermeidung des Austritts dieser toxischen Stoffe bei einem Leck der Behälter.

**Claims**

**1.** A process for removing fluorine and/or inorganic fluorides from gases, using an absorbent and/or catalytic mass (ACM), **characterized in that** the gas mixture to be purified, containing fluorine and/or inorganic fluorides, is brought into contact with an ACM containing titanium dioxide as the main constituent.

**2.** A process according to Claim 1, **characterized in that** the gas mixture to be purified is passed through the ACM at temperatures of from -200° to 250°C and partial pressures of the fluorine and/or the inorganic fluorides of between $10^{-5}$ mbar to 1 bar and with a contact time of at least 0•1 sec.

**3.** A process according to Claim 1 or 2, **characterized in that** in order to regenerate the charged ACM the latter is treated with water vapour or gas containing water vapour at from 250 to 600°C, preferably at 450°C.

**4.** A process according to Claim 3, **characterized in that** the ACM is intermittently regenerated by increasing the temperature to from 250 to 600°C and by making water available in the form of steam and/or moist air.

**5.** A process according to Claim 3 or 4, **characterized in that** in the case of a gas mixture to be purified which contains fluorine and/or the fluorides of the elements carbon, nitrogen, oxygen, sulphur, chlorine, bromine, iodine and/or xenon at least n/2 mol of water vapour is made available for **n** mol of the total fluorine content, and temperatures of from 100 to 600°C and contact times of from 0•05 to 100 sec are applied.

**6.** A process according to Claims 1 to 5, **characterized in that** the ACM (13) contains at least 70% of titanium dioxide.

**7.** A process according to Claim 1 or 2, **characterized in that** the BET surface of the ACM amounts to from 10 to 350 $m^2$/g.

**8.** A process according to Claim 7, **characterized in that** when the ACM is used as the absorbent the BET surface amounts to at least 20 $m^2$/g.

**9.** A process according to Claim 7, **characterized in that** when the ACM is used as the catalyst the BET surface amounts to under 70 $m^2$/g.

10. A process according to one of the preceding Claims, **characterized in that** the ACM (13) has associated therewith a corrosion-resistant vacuum pump (12), the suction end (14) of which is optionally connected to a container (11) containing the gas mixture to be purified and to a scavenging-gas reservoir (17) and the pressure end (15) of which is connected to the ACM (13).

11. Use of an absorbent and/or catalytic mass consisting predominantly of titanium dioxide as a protective substance for the storage and transportation of fluorine and inorganic fluorides in order to prevent the escape of these toxic substances in the event of a leak in the containers.

**Revendications**

1. Procédé pour l'élimination de fluor et/ou de fluorures minéraux à partir de gaz, au moyen d'une masse d'absorbant/catalyseur (MAC), caractérisé en ce que l'on met en contact le mélange gazeux à épurer, qui contient du fluor et/ou des fluorures minéraux, avec une MAC qui contient du dioxyde de titane en tant que composant principal.

2. Procédé selon la revendication 1, caractérisé en ce que le mélange gazeux à épurer est envoyé à travers la MAC à des températures de -200 à 250°C et sous des pressions partielles du fluor ou, respectivement, des fluorures minéraux, comprises entre $10^{-5}$ mbar et 1 bar, et pendant un temps de contact d'au moins 0,1 seconde.

3. Procédé selon la revendication 1 ou 2, caractérisé en ce que, pour la régénération de la MAC chargée, on la traite par de la vapeur d'eau ou des gaz contenant de la vapeur d'eau, à 250-600°C, de préférence à 450°C.

4. Procédé selon la revendication 3, caractérisé en ce que l'on régénère de façon intermittente la MAC par élévation de la température à 250-600°C et par apport d'eau sous forme de vapeur et/ou d'air humide.

5. Procédé selon la revendication 3 ou 4, caractérisé en ce que, dans le cas d'un mélange gazeux à épurer qui contient du fluor et/ou les fluorures des éléments carbone, azote, oxygène, soufre, chlore, brome, iode et/ou xénon, on met à disposition au moins n/2 moles de vapeur d'eau pour n moles de teneur totale en fluor, et en ce que l'on utilise des températures de 100 - 600°C et des temps de contact de 0,05 à 100 secondes.

6. Procédé selon les revendications 1 à 5, caractérisé en ce que la MAC (13) contient au moins 70 % de dioxyde de titane.

7. Procédé selon la revendication 1 ou 2, caractérisé en ce que la surface spécifique BET de la MAC va de 10 à 350 $m^2/g$.

8. Procédé selon la revendication 7, caractérisé en ce que, lorsqu'on utilise la MAC en tant qu'absorbant, la surface spécifique BET est d'au moins 20 $m^2/g$.

9. Procédé selon la revendication 7, caractérisé en ce que, lorsqu'on utilise la MAC en tant que catalyseur, la surface spécifique BET est inférieure à 70 $m^2/g$.

10. Procédé selon l'une des revendications précédentes, caractérisé en ce qu'à la MAC (13) est affectée une pompe à vide (12) résistante à la corrosion, dont le côté d'aspiration (14) peut si on le désire être raccordé à un récipient (11) contenant le mélange gazeux (10) à épurer et à un réservoir (17) de gaz de lavage, et dont le côté de refoulement (15) est raccordé à la MAC (13).

11. Utilisation d'une masse d'absorbant/catalyseur, constituée en majeure partie de dioxyde de titane, en tant que matière protectrice pour le stockage et le transport du fluor et de fluorures minéraux, pour empêcher le dégagement de ces substances toxiques dans la cas d'une fuite des contenants.

11

10

17

20

20

15

14

12

13

18

16

EP 0 431 351 B1